# EUROPÄISCHE PATENTSCHRIFT

(11) **EP 2 139 734 B1**
(45) Veröffentlichungstag und Bekanntmachung des Hinweises auf die Patenterteilung: **03.12.2014**
(21) Anmeldenummer: 08734767.0
(22) Anmeldetag: 26.03.2008
(51) Int. Cl.: B60T 13/38, B60T 17/08, F16D 65/28, F16D 121/02, F16D 121/12, F16D 125/06, F16D 127/06

(54) **BREMSZYLINDER FÜR EINE PNEUMATISCH BETÄTIGBARE FAHRZEUGBREMSE**
BRAKE CYLINDER FOR A PNEUMATICALLY OPERABLE VEHICLE BRAKE
CYLINDRE DE FREIN DESTINÉ À UN FREIN DE VÉHICULE À ACTIONNEMENT PNEUMATIQUE

(30) Priorität: 27.03.2007 DE 102007015206
(43) Veröffentlichungstag der Anmeldung: 06.01.2010
(73) Patentinhaber: KNORR-BREMSE Systeme für Nutzfahrzeuge GmbH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2008/002366
(87) Internationale Veröffentlichungsnummer: WO 2008/116631

(56) Entgegenhaltungen:
- DE-A1- 19 933 165
- DE-A1-102005 044 708
- US-A- 3 020 094
- US-A- 3 759 147

## Beschreibung

Die Erfindung betrifft einen Bremszylinder für eine pneumatisch betätigbare Fahrzeugbremse, insbesondere für ein Nutzfahrzeug, nach dem Oberbegriff des Anspruchs 1.

Eine Feststellbremse wird bei schweren Nutzfahrzeugen mittels sogenannter Federspeicherzylinder betätigt. Die Bremsbetätigungskraft wird hierbei über eine gespannte Feder erzeugt, so dass den Anforderungen an eine mechanisch wirkende Feststellbremse genüge getan ist.

Da die Federspeicherzylinder in der Regel dazu ausgelegt sind, sehr hohe Kräfte zu erzeugen, ist ein manuelles Lösen der Feststellbremse im Betriebsfall nicht sinnvoll. Das Lösen geschieht daher bei pneumatisch betätigten Bremsen mittels Druckluft.

Um dies zu ermöglichen, sind Federspeicherzylinder in der Regel mit einem Lösekolben ausgerüstet. Mit diesem Kolben ist es möglich, bei einer Einleitung von Druckluft die Feder so weit zusammenzudrücken, bis die Bremse gelöst ist. Damit die Feststellbremse während der Fahrt nicht in Eingriff kommt, wird der Kolben ständig mit Druckluft beaufschlagt, so dass sich die Feder nicht entspannen kann und somit die Feststellbremse nicht zur Wirkung kommt.

Eine übliche Bauform ist der sogenannte Kombizylinder. Dieser besteht aus bzw. kombiniert zwei verschiedene Bremszylinderarten, nämlich einen Federspeicherzylinder für die Feststellbremsanlage (FBA) und einen Druckluftzylinder (meist einen Membranzylinder) für die Betriebsbremsanlage (BBA).

Üblicherweise sind die beiden Zylinder hintereinander, in axialer Richtung angeordnet. Hinter dem Membranteil des Kombizylinders ist der Federspeicherteil angeordnet, der mit seiner Kolbenstange auf den Kolbenteller des Membranzylinders und von diesem auf den Bremshebel wirkt.

Diese Bauform benötigt relativ viel Bauraum. Durch die Einführung aufwendigerer Fahrwerksysteme, wie z.B. Einzelradaufhängungen, Leichtbauachsen, etc. wird der Bauraum jedoch zunehmend limitiert.

Es gibt daher Bestrebungen, durch andere Bauformen und Wirkungsweisen den Platzbedarf für den Feststellbremszylinder zu minimieren.

Eine kompakte Bauform bietet insofern der sogenannte Kompaktkombizylinder. Ein derartiger Bremszylinder ist in der DE 10 2005 044 708 A1 geoffenbart. Nach dieser Erfindung wird die Funktion des Feststellbremszylinders direkt in den Betriebszylinder integriert. Die Federspeicherfeder wird hierbei nicht mehr über einen separaten Federspeicherkolben betätigt, sondern ebenfalls über den Kolben des Betriebsbremszylinders. Um die Feststellbremse zu lösen, wird für eine kurze Zeitspanne der BBA-Kolben mittels einer speziellen Ansteuerung mit Druckluft beaufschlagt.

Wie beschrieben, erfolgt das Lösen der Feststellbremse im Regelfall mit Hilfe von Druckluft.

Die Druckversorgung des Sperrmechanismus erfolgt bei dem aus der genannten DE 10 2005 044 708 A1 bekannten Kompakt-Kombizylinder mittels eines zentral angeordneten, fest stehenden Versorgungsrohres, das durch den axial bewegbaren Kolben geführt ist.

Da die durch den Kolben gebildeten Räume luftdicht gegeneinander verschlossen sein müssen, ist der Kolben gegenüber dem Versorgungsrohr mittels einer Gleitdichtung entsprechend abgedichtet. Allerdings unterliegt diese Gleitdichtung einem sehr starken Verschleiß, da bei jeder Bremsbetätigung ein im Verhältnis zu der relativ klein dimensionierten Dichtung großer Gleitweg zurückgelegt werden muss.

Naturgemäß stellt dies eine äußerst unbefriedigende Lösung dar, die nicht nur zu einer Beeinträchtigung der Funktionssicherheit der Feststellbremse führt, sondern mit erheblichen Kosten verbunden ist, insbesondere durch Reparaturarbeiten.

Der Erfindung liegt die Aufgabe zugrunde, einen Bremszylinder der gattungsgemäßen Art so weiterzuentwickeln, dass mit konstruktiv geringem Aufwand eine Verbesserung der Funktionssicherheit und eine höhere Standzeit erreicht wird.

Dokument US 3,759,147 A offenbart einen Bremszylinder gemäß dem Oberbegriff von Anspruch 1.

Diese Aufgabe wird durch einen Bremszylinder mit den Merkmalen des Anspruchs 1 gelöst.

Durch diese konstruktive Ausgestaltung des Bremszylinders kann auf den Einsatz einer Gleitdichtung verzichtet werden. Hierdurch ergibt sich in erheblichem Maße eine Erhöhung der Standzeit des Bremszylinders, da der Zuführbereich der Druckluft zum Sperrmechanismus nicht mehr in dem bisher erforderlichen Umfang abgedichtet werden muss. Prinzipiell reicht ein Dichtring, um die durch den Kolben geführte, mit diesem jedoch starr verbundene Leitung abzudichten.

Somit bleibt die Funktionsfähigkeit des Bremszylinders, bezogen auf diesen Durchgangsbereich, unabhängig von der Anzahl der Bremsbetätigungen.

Nach einer vorteilhaften Weiterbildung der Erfindung ist vorgesehen, die Schlauchanschlüsse sowohl am Zylindergehäuse bzw. einem damit verbundenen Deckel und dem Kolben seitlich, vorzugsweise tangential zu führen, wodurch die Bewegung des Kolbens ohne Beeinträchtigung erfolgen kann. Hierzu trägt weiter bei, dass der Druckluftschlauch etwa ringförmig verlegt ist, in Nichtfunktionsstellung des Kolbens in einem gebildeten Druckraum. Vorzugsweise sind die Schlauchanschlüsse als Winkelstücke ausgebildet.

Weitere vorteilhafte Ausbildungen der Erfindung sind in den Unteransprüchen gekennzeichnet.

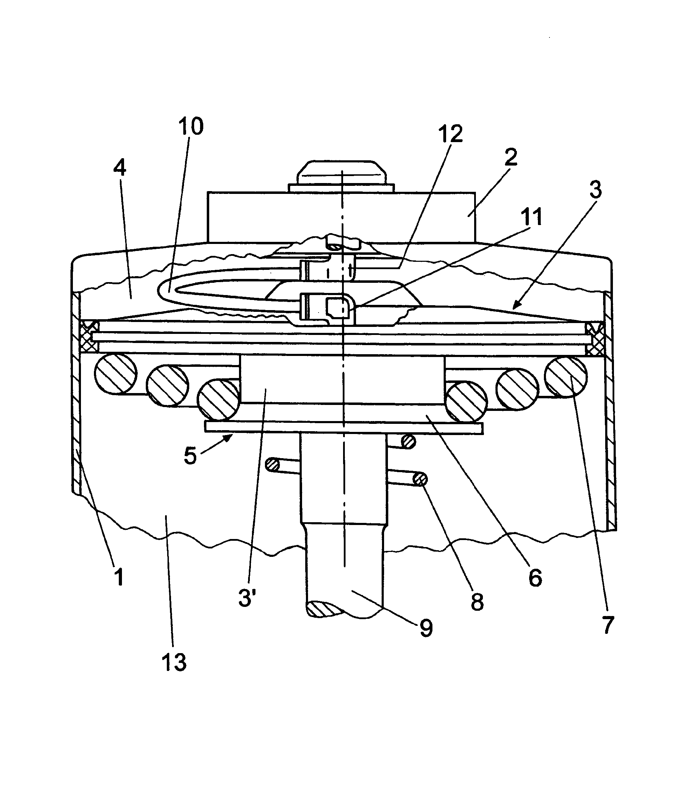

Ein Ausführungsbeispiel der Erfindung wird nachfolgend anhand der beigefügten Zeichnung beschrieben.

Die einzige Figur zeigt einen Teilausschnitt eines erfindungsgemäßen Bremszylinders in einer teilweise geschnittenen Seitenansicht.

Der in der Figur gezeigte Bremszylinder weist ein topfförmiges, vorzugsweise im wesentlichen zylindrisches Gehäuse 1 auf, das an einem seiner Enden von einem Deckel 2 verschlossen ist, durch den ein Schlauchanschluss 12 geführt ist.

In dem Gehäuse 1 ist ein Kolben 3 angeordnet, dessen Durchmesser dem Innendurchmesser des Gehäuses 1 entspricht.

Der Kolben 3 begrenzt zusammen mit dem das Gehäuse 1 verschließenden Deckel 2 einen Druckraum 4, in den zur Betätigung des Kolbens 3 über einen nicht dargestellten Druckluftanschluss im Deckel 2 Druckluft führbar ist.

Andererseits begrenzt der Kolben 3 einen Raum 13, in dem eine Rückholfeder 8 sowie eine Federspeicherfeder 7 eingesetzt sind.

Die Federspeicherfeder 7 ist zwischen den Kolben 3 und einen Federspeicherkolben 6 gesetzt, dessen Durchmesser kleiner ist als der lichte Durchmesser des Gehäuses 1.

Die Rückholfeder 8 ist zwischen die von der Federspeicherfeder 7 abgewandten Seite des Federspeicherkolbens 6 und dem vom Deckel 2 abgewandten inneren Endbereich des Gehäuses 1 gesetzt.

Ein pneumatisch betätigbarer Sperrmechanismus 5 ist in einem eckigen Aufnahmeraum 3' des Kolbens 3 untergebracht.

Da die Funktionsweise eines beispielhaften Sperrmechanismus aus der DE 10 2005 044 708 A1 bekannt ist, erübrigt sich eine detaillierte Beschreibung hierzu.

Der Sperrmechanismus ist pneumatisch betätigbar. Hierzu ist er über einen Druckluftschlauch 10 an eine für den Kolben 3 gemeinsame Druckluftversorgung angeschlossen und zwar über den Schlauchanschluss 12 und einen direkt mit dem Sperrmechanismus verbundenen Schlauchanschluss 11, die jeweils an einem Ende des Druckluftschlauches 10 befestigt sind.

Wie deutlich erkennbar ist, ist der Druckluftschlauch 10 ringförmig im Druckraum 4 geführt, um so die für den benötigten Hub notwendige Schlauchlänge ohne Beeinträchtigung der Bewegung des Kolbens 3 unterbringen zu können. Die Schlauchanschlüsse 11, 12 sind so ausgebildet, dass der Druckluftschlauch 10 seitlich eingeführt ist, wodurch sich eine sehr geringe Bauhöhe der Schlauchanschlüsse 11, 12 ergibt, durch die ebenfalls gewährleistet ist, dass die Funktionsfähigkeit des Kolbens 3 uneingeschränkt erhalten bleibt. Im Bedarfsfall kann der Druckluftschlauch auch als Spiralschlauch ausgebildet sein.

### Bezugszeichenliste

- 1: Gehäuse
- 2: Deckel
- 3: Kolben
- 3': Aufnahmeraum
- 4: Druckraum
- 5: Sperrmechanismus
- 6: Federspeicherkolben
- 7: Federspeicherfeder
- 8: Rückholfeder
- 9: Kolbenstange
- 10: Druckluftschlauch
- 11: Schlauchanschluss
- 12: Schlauchanschluss
- 13: Raum

## Patentansprüche

1. Bremszylinder für eine pneumatisch betätigbare Fahrzeugbremse mit
a) einem Federspeicherbremsabschnitt zur Durchführung von Feststellbremsvorgängen mittels einer Federspeicherfeder (7), und einem Betriebsbremsabschnitt zur Durchführung druckluftbetätigter Betriebsbremsungen, wobei der Federspeicherbremsabschnitt und der Betriebsbremsabschnitt zu einer baulichen Einheit in einem Gehäuse (1) zusammengefasst sind,
b) wobei das Gehäuse (1) von einem Kolben (3) in einen mit Druckluft beaufschlagbaren Druckraum (4) und einen Raum (13) unterteilt ist, wobei der Druckraum (4) zum Betätigen des Betriebsbremsabschnittes dient und wobei die Federspeicherfeder (7) des Federspeicherabschnitts in dem weiteren Raum (13) auf der gegenüberliegenden Seite des Kolbens (3) angeordnet ist,
c) wobei die Federspeicherfeder (7) auf einen weiteren Federspeicherkolben (6) im Raum (13) wirkt, der mittels eines pneumatisch betätigbaren Sperrmechanismus (5) gegenüber dem Kolben (3) arretierbar und durch Lösen des Sperrmechanismus von diesem lösbar ist, und der direkt oder über weitere Elemente mit einer Kolbenstange (9) zum Betätigen der Fahrzeugbremse verbunden ist,
**dadurch gekennzeichnet, dass**
d) die Druckluftzuführung zum Sperrmechanismus (5) über einen Druckluftschlauch (10) erfolgt,
e) wobei der Druckluftschlauch (10) im Druckraum (4) angeordnet ist.

2. Bremszylinder nach Anspruch 1, **dadurch gekennzeichnet, dass** der Druckluftschlauch (10) ringförmig im Druckraum (4) angeordnet ist.

3. Bremszylinder nach Anspruch 1 oder 2, **dadurch gekennzeichnet, dass** der Druckluftschlauch (10) als Spiralschlauch ausgebildet ist.

4. Bremszylinder nach einem der vorhergehenden Ansprüche, **dadurch gekennzeichnet, dass** der Druckluftschlauch (10) bzw. der zugeordnete Schlauchanschluss (11) durch den Kolben (3) geführt ist.

5. Bremszylinder nach einem der vorhergehenden Ansprüche, **dadurch gekennzeichnet, dass** der Druckluftschlauch (10) seitlich in den Sperrmechanismus (5) geführt ist.

6. Bremszylinder nach einem der vorhergehenden Ansprüche, **dadurch gekennzeichnet, dass** der Druckluftschlauch (10) seitlich in eine gehäuseseitige Druckluftversorgung geführt ist.

7. Bremszylinder nach einem der vorhergehenden Ansprüche, **dadurch gekennzeichnet, dass** der Druckluftschlauch (10) an als Winkelstücke ausgebildete Schlauchanschlüsse (11, 12) angeschlossen ist.

## Claims

1. Brake cylinder for a pneumatically actuable vehicle brake, comprising:
a) a spring brake section for carrying out parking brake operations by means of an accumulator spring (7) and a service brake section for carrying out service brake operations which are actuated by compressed air, the spring brake section and the service brake section being combined in a housing (1) to form one structural unit,
b) the housing (1) being divided by a piston (3) into a pressure chamber (4) loadable with compressed air and a chamber (13), the pressure chamber (4) serving for actuating the service brake section, and the accumulator spring (7) of the spring brake section being arranged in the further chamber (13) on the opposite side of the piston (3),
c) the accumulator spring (7) acting in the chamber (13) on a further accumulator piston (6) which can be locked with respect to the piston (3) by means of a pneumatically actuable locking mechanism (5) and can be released from the locking mechanism by release of the latter, and which is connected directly or via further elements to a piston rod (9) for actuating the vehicle brake,
**characterised in that**
d) compressed air is fed to the locking mechanism (5) via a compressed air hose (10),
e) the compressed air hose (10) being located in the pressure chamber (4).

2. Brake cylinder according to claim 1, **characterised in that** the compressed air hose (10) is located in the pressure chamber (4) in an annular arrangement.

3. Brake cylinder according to claim 1 or 2, **characterised in that** the compressed air hose (10) is configured as a spiral hose.

4. Brake cylinder according to any of the preceding claims, **characterised in that** the compressed air hose (10) or the associated hose connection (11) is guided through the piston (3).

5. Brake cylinder according to any of the preceding claims, **characterised in that** the compressed air hose (10) is guided laterally into the locking mechanism (5).

6. Brake cylinder according to any of the preceding claims, **characterised in that** the compressed air hose (10) is guided laterally into a housing-side compressed air supply.

7. Brake cylinder according to any of the preceding claims, **characterised in that** the compressed air hose (10) is connected to hose connections (11, 12) which are configured as elbow fittings.

## Revendications

1. Cylindre de frein destiné à un frein de véhicule pouvant être actionné pneumatiquement et comprenant
a) une section de frein à ressort accumulateur pour effectuer des opérations de frein de stationnement au moyen d'un ressort (7) accumulateur et une section de frein de service pour effectuer des freinages de service actionnés par de l'air comprimé, la section de frein à ressort accumulateur et la section de frein de service étant rassemblées en une unité de construction dans une carcasse (1),
b) dans lequel la carcasse (1) est subdivisée par un piston (3) en un compartiment (4) sous pression pouvant être alimenté en air comprimé et en un compartiment (13), le compartiment (4) sous pression servant à l'actionnement de la section de frein de service et le ressort (7) accumulateur de la section à ressort accumulateur étant disposé dans l'autre compartiment (13) du côté opposé du piston (3),
c) dans lequel le ressort (7) accumulateur agit dans le compartiment (13) sur un autre piston (6) de ressort accumulateur, qui peut, au moyen d'un mécanisme (5) de blocage pouvant être actionné pneumatiquement, être arrêté par rapport au piston (3), et, par déblocage du mécanisme de blocage, en être séparé et qui est relié directement ou par d'autres éléments à une tige (9) du piston pour l'actionnement du frein de véhicule, **caractérisé en ce que**
d) l'apport d'air comprimé au mécanisme (5) de blocage s'effectue par un conduit (10) souple pour de l'air comprimé,
e) le conduit (10) souple pour de l'air comprimé étant disposé dans le compartiment (4) sous pression.

2. Cylindre de frein suivant la revendication 1, **caractérisé en ce que** le conduit (10) souple pour de l'air comprimé est disposé en forme d'anneau dans le compartiment (4) sous pression.

3. Cylindre de frein suivant la revendication 1 ou 2, **caractérisé en ce que** le conduit (10) pour de l'air comprimé est constitué sous forme d'un conduit souple enroulé en spirale.

4. Cylindre de frein suivant l'une des revendications précédentes, **caractérisé en ce que** le conduit (10) souple pour de l'air comprimé ou le raccord (11) pour conduit souple, qui lui est associé, est guidé par le piston (3).

5. Cylindre de frein suivant l'une des revendications précédentes, **caractérisé en ce que** le conduit (10) souple pour de l'air comprimé est guidé latéralement dans le mécanisme (5) de blocage.

6. Cylindre de frein suivant l'une des revendications précédentes, **caractérisé en ce que** le conduit (10) souple pour de l'air comprimé est guidé latéralement dans une alimentation en air comprimé du côté de la carcasse.

7. Cylindre de frein suivant l'une des revendications précédentes, **caractérisé en ce que** le conduit (10) souple pour de l'air comprimé est raccordé à des raccords (11, 12) de conduit souple constitués sous la forme de pièces coudées.
